# FASCICULE DE BREVET EUROPEEN

(11) **EP 2 399 022 B1**
(45) Date de publication et mention de la délivrance du brevet: **13.04.2016**
(21) Numéro de dépôt: 10710073.7
(22) Date de dépôt: 17.02.2010
(51) Int. Cl.: F03B 3/18, F03B 11/00

(54) **INSTALLATION DE CONVERSION D'ÉNERGIE HYDRAULIQUE ET PROCÉDÉ DE COMMANDE D'UNE TELLE INSTALLATION**
ANLAGE ZUM WANDELN VON HYDRAULISCHER ENERGIE UND VERFAHREN ZUR STEUERUNG EINER SOLCHEN ANLAGE
PLANT FOR CONVERTING HYDRAULIC ENERGY AND PROCESS OF CONTROL OF SUCH A PLANT

(30) Priorité: 18.02.2009 FR 0951068
(43) Date de publication de la demande: 28.12.2011
(73) Titulaire: ALSTOM Renewable Technologies, 38100 Grenoble (FR)
(72) Inventeur: BREMOND, Jacques, F-38120 Saint-Egreve (FR); MARIN, Joel Louis Pierre, F-38640 Claix (FR); MAZZOUJI, Farid, F-38210 Vourey (FR); BAZIN, Danièle, F-38500 Voiron (FR)
(74) Mandataire: General Electric Technology GmbH
(86) Numéro de dépôt international: PCT/FR2010/050268
(87) Numéro de publication internationale: WO 2010/094887

(56) Documents cités:
- FR-A- 2 300 909
- GB-A- 799 013
- JP-A- 4 063 969
- JP-A- 52 066 128
- JP-A- 57 108 468
- US-A- 4 017 211
- US-A1- 2004 037 698
- GREIN H: "VIBRATION PHENOMENA IN FRANCIS TURBINES: THEIR CAUSES AND PREVENTION" ESCHER WYSS NEWS, ESCHER WYSS, ZURICH, CH, vol. 54/55, no. 1, 1 janvier 1981 (1981-01-01), pages 37-42, XP008018462 ISSN: 0367-1402

## Description

La présente invention a trait à une installation de conversion d'énergie hydraulique en énergie électrique ou mécanique, une telle installation comprenant une turbine hydraulique, un conduit d'amenée à la turbine d'un écoulement forcé d'eau et un conduit d'évacuation de cet écoulement lorsqu'il sort de la turbine.

Dans les installations connues, l'écoulement en aval de la roue d'une turbine fluctue en fonction du point de fonctionnement de la turbine qui dépend, entre autres, du débit d'eau acheminé à la turbine. A certains points de fonctionnement, des tourbillons ou turbulences, généralement qualifiés de « torches », tendent à se former et provoquent des fluctuations de pression et/ou de puissance.

Pour répondre à ce problème, il est connu, par exemple de WO-A-2005/038243 d'équiper la roue d'une turbine Francis avec une pointe comprenant deux surfaces, respectivement convergente et divergente en direction d'un axe de rotation de la roue, ce qui limite, dans une large mesure, les turbulences. Toutefois, à certains régimes, les turbulences demeurent.

Pour palier à cette perte de rendement, il a été envisagé dans US-A-2007/0009352, des ailettes rétractables. Ces ailettes rétractables ne sont pas adaptées à tous les points de fonctionnement d'une turbine et, dans certaines conditions de fonctionnement, leur impact sur le rendement de l'installation est très négatif.

Il est connu de JP-A-57 108468 de monter une ailette mobile en rotation au-dessus d'une ailette fixe dans un conduit d'évacuation de l'écoulement de sortie d'une turbine. L'ailette fixe perturbe l'écoulement, au moins à certains régimes.

En outre, des problèmes de cavitation peuvent survenir avec les matériels connus.

C'est à ces inconvénients qu'entend plus particulièrement remédier l'invention en proposant une installation de conversion d'énergie du type mentionné ci-dessus dans laquelle l'écoulement transitant dans le conduit d'évacuation peut être stabilisé, sans diminuer le rendement de l'installation aux différents points de fonctionnement de celle-ci.

A cet effet, l'invention concerne une installation du type mentionné ci-dessus dans laquelle chaque ailette de guidage est mobile en rotation autour d'un axe sécant à la paroi du conduit d'évacuation, cette installation comprenant des moyens de commande de la position angulaire de l'ailette autour de son axe de rotation, alors que chaque ailette mobile en rotation est rétractable dans la paroi du conduit d'évacuation et que l'installation comprend des moyens de réglage de l'enfoncement de cette ailette dans cette paroi.

Grâce à l'invention, il est possible d'adapter l'orientation des ailettes de guidage et la façon dont elles font saillie par rapport à la paroi du conduit d'évacuation ou conduit d'aspiration, en tenant compte du sens de l'éventuelle, composante de rotation de l'écoulement en sortie de turbine.

Selon des aspects avantageux mais non obligatoires de l'invention, une telle installation peut incorporer une ou plusieurs des caractéristiques suivantes, prises dans toutes combinaisons techniquement admissibles :
- Les moyens de commande sont aptes à fixer la position angulaire de l'ailette de guidage en fonction d'au moins un paramètre représentatif de l'écoulement.
- La ou chaque ailette mobile en rotation est démontable, par rapport à la paroi du conduit d'évacuation, par l'intérieur de ce conduit. En variante, l'installation comprend une galerie d'accès à la face externe de la paroi du conduit d'évacuation et la ou chaque ailette est démontable, par rapport à cette paroi, à partir de cette galerie.
- Chaque ailette est solidaire d'un piston monté coulissant, parallèlement à l'axe de rotation de l'ailette, par rapport à une pièce fixée sur la paroi, alors qu'un sous-ensemble comprenant l'ailette et le piston est monté avec possibilité de rotation autour de l'axe de rotation de l'ailette et en ce que ce sous-ensemble comprend des moyens de coopération avec des moyens d'entraînement du sous-ensemble en rotation autour de l'axe de rotation de l'ailette.
- Chaque ailette mobile s'étend de part et d'autre de son axe de rotation.
- L'installation comprend plusieurs ailettes de guidage mobiles en rotation, chacune autour d'un axe sécant à la paroi du conduit d'évacuation et les moyens de commande agissent de façon groupée sur les ailettes de guidage. En variante, les moyens de commande agissent de façon individualisée sur les ailettes de guidage.

L'invention concerne également un procédé qui peut être mis en oeuvre avec une installation telle que mentionnée ci-dessus et, plus spécifiquement, un procédé de commande d'une installation de conversion d'énergie hydraulique en énergie électrique ou mécanique comprenant une turbine hydraulique, un conduit d'amenée à la turbine d'un écoulement forcé d'eau et un conduit d'évacuation de l'écoulement sortant de la turbine et au moins une ailette de guidage de l'écoulement dans la conduit d'évacuation, caractérisé en ce que ce procédé comprend une étape consistant à commander la position angulaire, autour d'un axe sécant à la paroi du conduit d'évacuation, de chaque ailette de guidage de l'écoulement dans le conduit d'évacuation, ainsi qu'une étape consistant à commander la position de chaque ailette mobile en enfoncement dans la paroi du conduit d'évacuation.

Ce procédé peut incorporer une ou plusieurs des caractéristiques suivantes qui sont avantageuses et optionnelles :
- La position angulaire de l'ailette est commandée en fonction d'au moins un paramètre représentatif de l'écoulement, notamment de son débit.
- L'installation comprend plusieurs ailettes réparties sur la paroi du tube d'évacuation et la position des ailettes est commandée de façon groupée. En variante, la position de chaque ailette est commandée individuellement.
- La position de chaque ailette mobile en enfoncement dans la paroi du conduit d'évacuation est commandée en alimentant ou non, en eau sous pression provenant du conduit d'amenée, une chambre ménagée dans un corps appartenant à un sous-ensemble et délimitée par un piston solidaire de l'ailette.

L'invention sera mieux comprise et d'autres avantages de celle-ci apparaîtront plus clairement à la lumière de la description qui va suivre de deux modes de réalisation d'une installation conforme à son principe et de son procédé de commande, donné uniquement à titre d'exemple et faite en référence aux dessins annexés dans lesquels :
- la figure 1 est une représentation schématique de principe, en section axiale, d'une installation conforme à un premier mode de réalisation de l'invention ;
- la figure 2 est une vue à plus grande échelle du détail Il à la figure 1 ;
- la figure 3 est une représentation schématique en développé de la répartition des vitesses dans une première configuration d'utilisation de l'installation de la figure 1 ;
- la figure 4 est une vue de face, dans le sens de la flèche F₁ à la figure 2, d'une ailette mobile en rotation dans une position correspond à la répartition de vitesse de la figure 3 ;
- la figure 5 est une représentation schématique analogue à la figure 3, alors que l'installation fonctionne dans d'autres conditions ;
- la figure 6 est une vue analogue à la figure 4 lorsque l'installation fonctionne dans les conditions représentées à la figure 5 ; et
- la figure 7 est une vue analogue à la figure 2 pour une installation conforme à un deuxième mode de réalisation de l'invention.

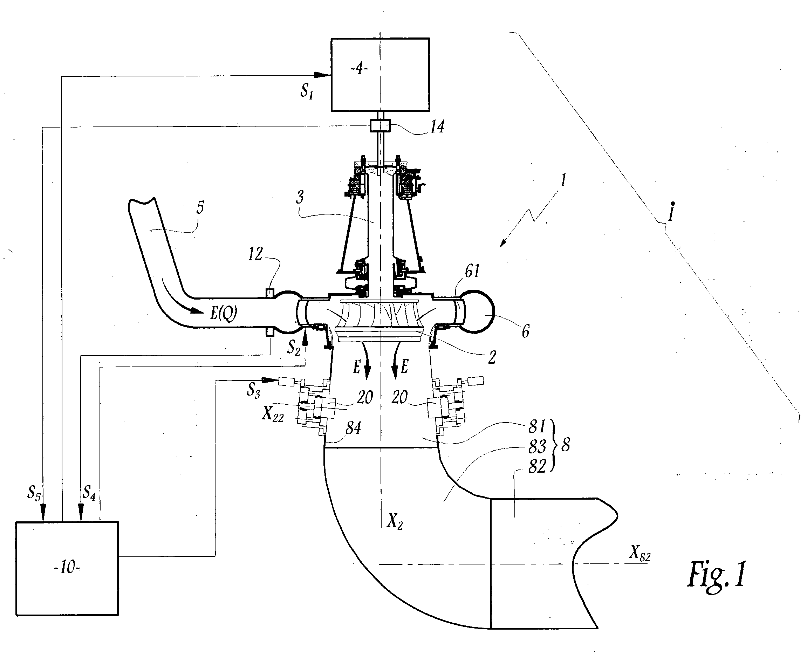

L'installation I représentée aux figures 1 à 6 comprend une turbine 1 de type Francis, dont la roue 2 est destinée à être mise en rotation, autour d'un axe vertical X₂, par un écoulement forcé d'eau E provenant d'une retenue d'eau non représentée. Un arbre 3, solidaire de la roue 2, est couplé à un alternateur 4 qui délivre un courant alternatif à un réseau non représenté, en fonction de la rotation de la roue 2. L'installation I permet donc de convertir l'énergie hydraulique de l'écoulement E en énergie électrique. L'installation I peut comprendre plusieurs turbines 1 alimentées à partir de la retenue d'eau.

En variante, l'arbre 3 peut être couplé à un ensemble mécanique, auquel cas l'installation I convertit l'énergie hydraulique de l'écoulement E en énergie mécanique.

Une conduite d'alimentation 5 permet d'amener l'écoulement E à la roue 2 et s'étend entre la retenue d'eau et une bâche 6 équipée de directrices 61 qui régulent l'écoulement E.

Un conduit 8 est prévu en aval de la turbine 1 pour évacuer l'écoulement E et le renvoyer vers le lit d'une rivière ou d'un fleuve à partir de laquelle ou duquel est alimentée la retenue d'eau. Ce conduit 8 est parfois qualifié de conduit d'aspiration.

Une unité de commande 10 est prévue pour piloter la turbine 1 en fonction, notamment, des besoins en électricité du réseau alimenté à partir de l'alternateur 4 et du débit d'eau disponible pour l'écoulement E. L'unité 10 est capable de définir plusieurs points de fonctionnement de l'installation I et d'adresser, respectivement à l'alternateur 4 et aux directrices 61, des signaux de commande S₁ et S₂.

Le conduit 8 comprend une partie amont 81 sensiblement verticale, tronconique et centrée sur l'axe de rotation X₂ de la roue 2. Le conduit 8 comprend également une partie aval 82 centrée sur un axe X₈₂ sensiblement horizontal. Cet axe X₈₂ est sensiblement horizontal en ce sens qu'il forme avec un plan horizontal un angle inférieur à 20°. En pratique, l'axe X₈₂ peut être légèrement ascendant dans le sens de l'écoulement E. Un coude 83, à 90° relie les parties 81 et 82 du conduit 8.

Pour stabiliser l'écoulement E après qu'il a traversé la roue 2, le conduit 8 est pourvu, dans sa partie amont 81, de plusieurs ailettes 20 qui font saillie, à partir de la paroi 84 de la partie amont 81, en direction de l'axe X₂. Ces ailettes 20 sont destinées à être léchées par la portion de l'écoulement E qui s'écoule, en sortant de la roue 2, le long de la paroi 84. Ces ailettes influent donc sur l'écoulement E dans le conduit d'évacuation ou d'aspiration 8.

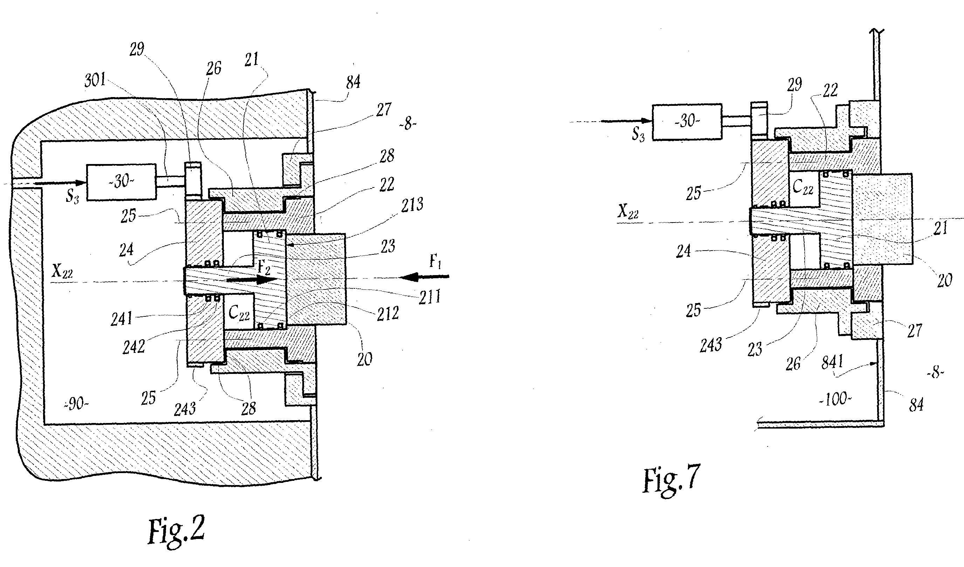

La figure 1, qui est une section dans un plan vertical comprenant l'axe X₂, montre deux ailettes 20. En pratique, le nombre d'ailettes 20 est choisi en fonction du diamètre de la partie 81 et du débit prévu pour l'écoulement E. Comme il ressort plus particulièrement de la figure 2, chaque ailette 20 est solidaire d'un piston 21 monté dans un corps cylindrique 22 à base circulaire centré sur un axe X₂₂ perpendiculaire à la paroi 84. Le piston 21 est équipé de joints d'étanchéité 211 et 212 et solidaire d'une tige 23 qui traverse une plaque 24 en forme de disque, avec possibilité de coulissement par rapport à cette plaque le long de l'axe X₂₂. La plaque 24 est équipée de joints d'étanchéité 241 et 242 qui assurent, avec les joints 211 et 212, l'isolation fluidique vis-à-vis de l'extérieur d'une chambre C₂₂ ménagée radialement à l'intérieur du corps 22, entre la plaque 24 et le piston 21 et autour de la tige 23.

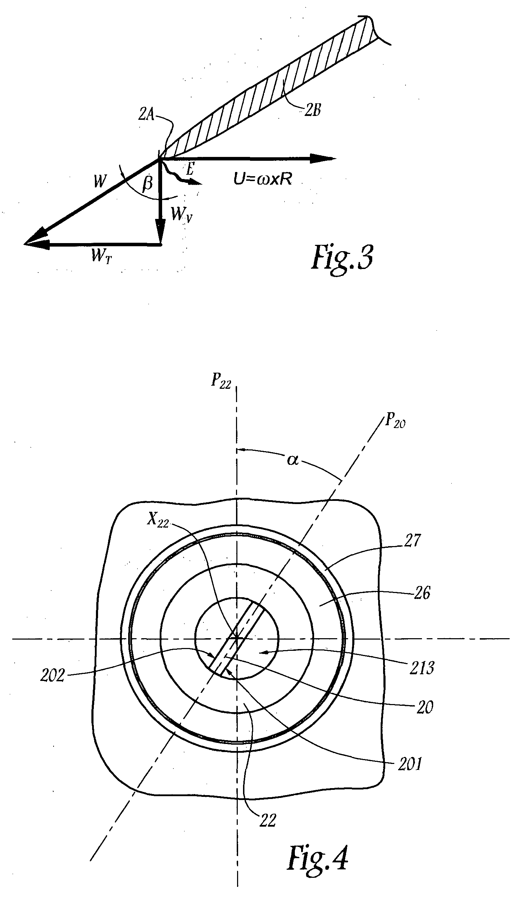

Comme cela ressort de la figure 4, chaque ailette 20 s'étend de part et d'autre de l'axe X₂₂ correspondant. En pratique, chaque ailette 20 est centrée sur l'axe X₂₂.

La plaque 24 est fixée sur le corps 22 au moyen de vis 25 représentées par leurs traits d'axe sur la figure 2.

La chambre C₂₂ est alimentée, par un conduit non représenté, en eau provenant de la conduite 5. Ceci permet de mettre en pression la chambre C₂₂, ce qui a pour effet de repousser le piston 21 dans le sens de la flèche F₂ à la figure 2 et de faire dépasser l'ailette 20 en direction de l'axe X₂, par rapport à la paroi 84.

Le sous-ensemble formé par les pièces 20 à 25 est monté, avec possibilité de rotation autour de l'axe X₂₂, dans une chemise 26 immobilisée dans une couronne 27 fixe par rapport à la paroi 84. Des joints formant palier sont éventuellement disposés radialement autour du corps 22 et de la plaque 24 et permettent la rotation du sous-ensemble précité par rapport à la chemise 26.

Dans sa partie qui dépasse axialement, le long de l'axe X₂₂, par rapport à la chemise 26, la couronne 24 est pourvue d'une denture radiale externe 243 qui engrène avec un pignon 29 entraîné par l'arbre de sortie 301 d'un servo-moteur électrique 30. Ce moteur est commandé par l'unité 10 au moyen d'un signal électronique S₃.

Le servo-moteur 30 permet donc d'entraîner en rotation le sous ensemble formé des pièces 20 à 25 autour de l'axe X₂₂, en fonction d'un signal de commande S₃ reçu de l'unité 10.

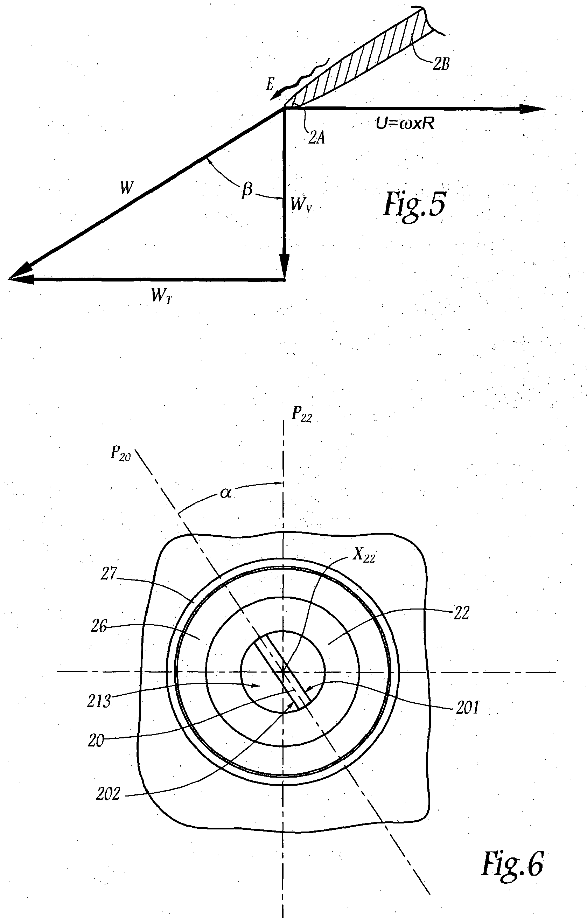

Cette rotation permet de faire varier la position angulaire de l'ailette 20 autour de l'axe X₂₂. Chaque ailette 20 est donc orientable autour d'un axe X₂₂. Comme il ressort des figures 4 et 6, l'ailette 20 est en forme de plaque plane et sa position angulaire peut être mesurée par un angle α pris, au dessus de l'axe X₂₂, entre un plan P₂₀ médian entre les grandes faces latérales 201 et 202 de l'ailette 20 et un plan vertical P₂₂ contenant l'axe X₂₂.

Le moteur 30 permet, pour chaque ailette mobile 20, adapter sa position angulaire autour de l'axe X₂₂ aux conditions de l'écoulement E dans le conduit 8.

La figure 3 montre, dans une vue développée de la ceinture de la roue 2 , la répartition des vitesses au voisinage du bord de fuite 2A d'une aube 2B de la roue 2. En considérant que la roue 2 tourne avec une vitesse angulaire ω, alors la vitesse tangentielle U du bord de fuite 2A est égale à ωx R, où R est la distance radiale, ou rayon, entre le bord 2A et l'axe X₂.

Par ailleurs, si l'on considère la vitesse W de l'écoulement d'eau en sortie de la roue 2, cette vitesse W est dans le prolongement de l'aube 2B. Cette vitesse W se décompose en une composante W_{V} verticale, c'est-à-dire parallèle à l'axe X₂, et une composante tangentielle W_{T}.

Dans une configuration à faible débit Q pour l'écoulement E, telle que représentée à la figure 3, la composante verticale de vitesse W_{V} est relativement faible et, comme l'angle β d'inclinaison de la vitesse W par rapport à la verticale est fixée par la géométrie de l'aube 2B, la composante tangentielle W_{T} de la vitesse a un module |W_{T}| qui est inférieur au modulé |U| de la vitesse tangentielle de l'aube. Dans ces conditions, l'eau qui est éjectée de la roue 2 au voisinage du bord 2A a une composante de vitesse tangentielle dans le même sens que la vitesse tangentielle U de l'aube, c'est-à-dire dirigée vers la droite sur la figure 3. L'écoulement de l'eau dans le plan de cette figure est représenté par la flèche E.

Dans ce cas, l'eau sortant de la roue tourne, autour de l'axe X₂, dans le même sens que la roue 2.

Ceci induit la formation de torches turbulentes dans le conduit 8, avec de fortes fluctuations de pression, ce que peuvent corriger les ailettes 20 si elles sont correctement positionnées.

Dans le cas où l'écoulement E a un débit Q important, la composante verticale W_{V} de la vitesse W a un module important et, comme l'angle p est fixé par la géométrie de l'aube 2B, la composante tangentielle V_{T} a alors un module supérieur au module de la vitesse tangentielle U. Dans ce cas représenté à la figure 5, l'écoulement E est éjecté vers la gauche à la figure 5 et il peut être représenté par la flèche E sur cette figure. Dans ce cas, l'écoulement E tourne en sens inverse du sens de rotation de la roue 2 lorsqu'il est éjecté de celle-ci. Là encore, des torches turbulentes sont crées, avec des fluctuations de pression importantes, ce que peuvent corriger les ailettes 20.

Ainsi, suivant la valeur du débit Q, le sens de rotation autour de l'axe X₂ de l'écoulement E dans le conduit d'aspiration 8 varie. La position angulaire des ailettes 20 permet d'influer sur cette rotation de l'écoulement E de la façon suivante :
i) A faible débit Q, si le point de fonctionnement est tel qu'on cherche seulement à réduire fortement les fluctuations de pression sans se préoccuper de la chute de rendement, alors on fait pivoter chaque ailette 20 avec un angle α positif dans la représentation de la figure 4, afin de ralentir au maximum l'écoulement rotatif de l'eau dans la conduit d'aspiration 8.
ii) Toujours à faible débit Q, si le point de fonctionnement présente toujours des fluctuations de pression, mais à un niveau moindre que le cas i) considéré ci-dessus, alors l'ailette 20 peut être orientée avec un angle α négatif dans la représentation de la figure 4, afin d'avoir un impact négatif moindre sur le rendement de l'installation, tout en réduisant légèrement les fluctuations de pression.
iii) Dans un cas à fort débit Q, le sens de rotation de l'écoulement dans le conduit d'aspiration étant inversé, le raisonnement pour les deux points de fonctionnement ci-dessus est inversé.

Pour ce faire, l'angle α formé par l'ailette 20 avec la verticale peut être ajusté pour obtenir l'effet désiré. Si on oriente l'ailette dans une direction sensiblement parallèle à l'écoulement, l'impact sur le rendement est faible. En revanche, si on veut réduire fortement les fluctuations de pression pour un point de fonctionnement, on peut faire pivoter l'ailette de manière à ce qu'elle s'oppose à l'écoulement. Cette réduction des fluctuations de pression a un effet négatif relativement important sur le rendement, mais cet effet négatif n'existe que pour le point de fonctionnement considéré, l'angle α d'orientation des ailettes 20 autour des axes X₂₂ pouvant être réajusté différemment pour les autres points de fonctionnement.

On règle donc l'angle α d'orientation de chaque ailette 20 de manière à obtenir le meilleur compromis fluctuations de pression / rendement.

Lorsque le débit de l'écoulement E et la vitesse de rotation de la roue 2 sont tels que les modules |W_{T}| et |U| des vitesses tangentielles sont égaux, c'est-à-dire lorsque l'écoulement E est sensiblement vertical en sortie de la roue 2, les ailettes 20 sont disposées de telle sorte que leurs plans médians respectifs P₂₀ sont verticaux, c'est-à-dire que l'angle α prend une valeur nulle.

Le réglage de la position angulaire des ailettes 20 autour de leurs axes de rotation X₂₂ peut être effectué de façon empirique, en vérifiant a posteriori l'influence de cette position sur le rendement de l'installation I et le niveau de fluctuations de pression.

De façon avantageuse, l'unité 10 commande automatiquement les ailettes orientables 20 en fonction d'un signal S₄ délivré par un capteur de débit 12 installé sur la conduite 5. Ce capteur de débit peut être de tout type approprié, par exemple réalisé à partir de capteurs de pression différentielle. En première approximation, et en considérant que la roue 2 tourne à vitesse sensiblement constante, ce qui est le cas pour les machines équipées d'un alternateur synchrone, il est possible de calculer dans l'unité 10 les vitesses tangentielles W_{T} et U, sur la base du débit Q de l'écoulement E et, à partir de là, de déterminer la direction de sortie de l'écoulement E par rapport au sens de rotation de la roue, à savoir dans le même sens ou en sens inverse. L'unité 10 est alors en mesure de déterminer quelle orientation angulaire doit être donnée aux ailettes 20, autour de leurs axes X₂₂ respectifs, pour stabiliser l'écoulement E.

En variante ou en complément, il est possible de monter un tachymètre 14 sur l'arbre 3 et de fournir à l'unité 10 un signal S₅ représentatif de la vitesse de rotation de l'arbre 3, ce qui permet de connaître précisément la valeur de la vitesse tangentielle U. Ce signal S₅ peut être intégré par l'unité 10 pour déterminer la valeur de l'angle d'inclinaison α à donner à chacune des ailettes 20 pour stabiliser l'écoulement E dans le tube d'aspiration 8.

Chaque chemise 26 est vissée dans une couronne 27 et, lorsqu'il convient d'intervenir sur l'un des sous ensembles 20-25 pour sa maintenance, il suffit de dévisser la chemise 26 correspondante de la couronne 27 pour avoir accès, à partir de la partie amont 81 du conduit 8, aux éléments constitutifs de ce sous ensemble. Les éléments de support et de positionnement des ailettes sont disposés dans un logement 90 ménagé dans la structure en béton de l'installation, radialement à l'extérieur de la paroi 84, comme représenté uniquement à la figure 2.

En variante, et comme représenté à la figure 7, une galerie 100 d'accès à la face externe 841 de la paroi 84 peut être ménagée radialement autour de la partie 81 du conduit 8, ce qui permet de réaliser les opérations de maintenance sur les ailettes 20 et leurs organes d'entraînement à partir de cette galerie. La forme de la chemise 26 et celle de la couronne 27 sont alors adaptées.

Sur cette figure 7, les éléments analogues à ceux du premier mode de réalisation portent les mêmes références et une ailette 20 est solidaire d'un piston 21 que prolonge une tige 23 coulissant dans une plaque 24 solidaire d'un corps 22 au moyen de vis 25. Une chemise 26 entoure le sous ensemble formé des pièces 20 à 25 et est vissée sur une couronne 27, à partir la galerie 100. Un servo-moteur 30 entraîne un pignon 29 en prise avec une denture extérieure 243 de la plaque 24, ce qui permet de contrôler l'orientation angulaire de l'ailette 20 autour d'un axe X₂₂ perpendiculaire à la paroi 84, comme expliqué pour le premier mode de réalisation.

Dans les deux modes de réalisation, la pression d'alimentation de la chambre C₂₂ permet de contrôler la position, le long de l'axe X₂₂, du piston 21 et de l'ailette 20. En particulier, lorsque, l'écoulement dans le conduit 8 est stabilisé, il est possible de ne pas alimenter la chambre C₂₂ en eau sous pression, de telle sorte que l'ailette 20 est rétractée ou enfoncée, par rapport à la paroi 84, à l'extérieur du conduit 8, du fait de la pression de l'eau sur la face 213 du piston 21 tournée vers le conduit 8.

En variante, la position de chaque ailette le long de son axe de rotation X₂₂ peut être commandée par des moyens autres qu'une chambre de pression alimentée en eau. On peut utiliser, par exemple, à cet effet un servo-moteur électrique ou un vérin hydraulique, mécanique ou électrique.

Le piston 21, le servo-moteur ou le vérin précité permet donc de commander l'enfoncement de chaque ailette 20 dans la paroi 84, en tenant compte d'un paramètre représentatif de l'écoulement E, comme mentionné ci-dessus pour ce qui concerne l'orientation angulaire des ailettes.

L'invention décrite ci-dessus est représentée sur les figures dans le cas où l'axe X₂₂ de rotation des ailettes 20 est perpendiculaire à la paroi 84. Ceci n'est pas obligatoire et il suffit que l'axe X₂₂, qui est fixe par rapport à la paroi 84, soit sécant à cette paroi. En pratique, si l'axe X₂₂ n'est pas perpendiculaire à la paroi 84, l'angle aigu qu'il forme avec cette paroi est choisi supérieur à 45°, de préférence supérieur à 75°, de préférence encore supérieur à 85°.

L'invention a été représentée, dans les deux modes de réalisation, avec un servo-moteur associé à chaque ailette 20, ce qui permet de commander les ailettes individuellement. La synchronisation entre le mouvement des ailettes est assurée par l'unité 10 et sa gestion des différents signaux S₃ destinés aux différents moteurs 30.

En variante, on peut utiliser des moyens mécaniques reliant entre elles les ailettes 20, ce qui permet d'assurer une commande groupée des ailettes. On peut, par exemple, utiliser des chaînes ou un cercle de vannage tel que connu, par exemple, pour la commande des directrices 61.

D'autres dispositifs peuvent être envisagés pour assurer la rotation, avec commande individuelle ou groupée, des ailettes 20. En pratique, cette rotation peut être assurée par tout actionneur adapté, par exemple un vérin rotatif ou linéaire associé à une bielle. Les vérins peuvent être actionnés par de l'huile, un courant électrique, de l'air comprimé ou de l'eau. La solution utilisant des vérins à eau est privilégiée compte tenu de l'environnement de travail de ces actionneurs.

L'invention a été représentée lors de son application avec une turbine de type Francis. Elle est toutefois applicable à d'autres types de turbine, telle que les turbines Kaplan et les turbines de type hélice, ainsi qu'aux turbine-pompes.

L'invention a été représentée dans le cas où toutes les ailettes sont orientables, c'est-à-dire mobiles en rotation autour d'un axe sécant, en particulier perpendiculaire, à la paroi du conduit d'évacuation. En variante, seule certaines ailettes peuvent être orientables.

Selon une variante non représentée de l'invention, celle-ci peut être mise en oeuvre alors que la roue de la turbine est équipée d'une pointe visant à améliorer le guidage de l'écoulement à l'aval de la roue, par exemple une pointe connue de WO-A-2005/038243.

L'invention a été décrite ci-dessus dans le cas où le débit de l'écoulement E est utilisé pour déterminer l'orientation angulaire des ailettes 20. Toutefois, d'autres paramètres peuvent être pris en compte à cet effet, notamment la hauteur de chute H aux bornes de l'installation, la puissance P délivrée par l'installation ou la vitesse de rotation ω de la roue 2.

En variante, les ailettes 20 peuvent avoir une forme autre que plane.

## Revendications

1. Installation (I) de conversion d'énergie hydraulique en énergie électrique, cette installation comprenant une turbine hydraulique (1), un conduit (5) d'amenée à la turbine d'un écoulement forcé (E) d'eau, un conduit (8) d'évacuation de l'écoulement sortant de la turbine et des ailettes (20) de guidage de l'écoulement dans le conduit d'évacuation, chaque ailette de guidage (20) étant mobile en rotation autour d'un axe (X₂₂) sécant à la paroi (84) du conduit d'évacuation, l'installation comprenant des moyens (10, 30) de commande de la position angulaire (α) de l'ailette autour de son axe de rotation, **caractérisée en ce que** chaque ailette (20) mobile en rotation est rétractable dans la paroi (84) du conduit d'évacuation (8) et **en ce que** l'installation comprend des moyens (21) aptes à régler l'enfoncement de l'ailette (20) dans la paroi.

2. Installation selon la revendication 1, **caractérisée en ce que** les moyens de commande (10, 30) sont aptes à fixer la position angulaire (α) de l'ailette de guidage (20) en fonction d'au moins un paramètre (Q, ω, H, P) représentatif de l'écoulement (E).

3. Installation selon l'une des revendications précédentes, **caractérisée en ce que** la ou chaque ailette (20) mobile en rotation est démontable, par rapport à la paroi (84) du conduit d'évacuation (8), par l'intérieur de ce conduit.

4. Installation selon l'une des revendications 1 ou 2, **caractérisée en ce qu'**elle comprend une galerie (100) d'accès à la face externe (841) de la paroi (84) du conduit d'évacuation (8) et **en ce que** la ou chaque ailette (20) est démontable, par rapport à cette paroi, à partir de la galerie.

5. Installation selon l'une des revendications précédentes, **caractérisée en ce que** chaque ailette (20) est solidaire d'un piston (21) monté coulissant, parallèlement à l'axe (X₂₂) de rotation de l'ailette, par rapport à une pièce (27) fixée sur la paroi, **en ce qu'**un sous-ensemble (20-25) comprenant l'ailette et le piston est monté avec possibilité de rotation autour de l'axe de rotation de l'ailette et **en ce que** ce sous-ensemble comprend des moyens (243) de coopération avec des moyens (29, 30) d'entraînement du sous-ensemble en rotation autour de l'axe (X₂₂) de rotation de l'ailette.

6. Installation selon l'une des revendications précédentes, **caractérisée en ce que** chaque ailette mobile (20) s'étend de part et d'autre de son axe de rotation (X₂₂).

7. Procédé de commande d'une installation (I) de conversion d'énergie hydraulique en énergie électrique ou mécanique comprenant une turbine hydraulique (1), un conduit (5) d'amenée à la turbine d'un écoulement forcé (E) d'eau, un conduit (8) d'évacuation de l'écoulement sortant de la turbine et au moins une ailette (20) de guidage de l'écoulement dans le conduit d'évacuation, le procédé comprenant une étape consistant à commander (S₃) la position angulaire (α), autour d'un axe (X₂₂) sécant à la paroi (84) du conduit d'évacuation (8), de chaque ailette (20) de guidage de l'écoulement (E) dans le conduit d'évacuation et **caractérisé en ce qu'**il comprend une étape consistant à commander la position de chaque ailette mobile (20) en enfoncement dans la paroi (84) du conduit d'évacuation (8).

8. Procédé selon la revendication 7, **caractérisé en ce que** la position angulaire de l'ailette (20) est commandée en fonction d'au moins un paramètre (Q, ω, H, P) représentatif de l'écoulement (E), notamment du débit (Q) de l'écoulement (E).

9. Procédé selon l'une des revendications 7 ou 8, **caractérisé en ce que** l'installation comprend plusieurs ailettes (20) réparties sur la paroi (84) du tube d'évacuation (8) et la position des ailettes est commandée de façon groupée.

10. Procédé selon l'une des revendications 7 ou 8, **caractérisé en ce que** l'installation comprend plusieurs ailettes (20) réparties sur la paroi (84) du tube d'évacuation (8) et la positon de chaque ailette est commandée individuellement.

11. Procédé selon l'une des revendications 7 à 10, **caractérisé en ce que** la position de chaque ailette mobile (20) en enfoncement dans la paroi (84) du conduit d'évacuation est commandée en alimentant ou non, en eau sous pression provenant du conduit d'amenée (5), une chambre (C₂₂) ménagée dans un corps (22) appartenant à un sous-ensemble (20-25) et délimitée par un piston (21) solidaire de l'ailette.

## Patentansprüche

1. Anlage (I) zum Wandeln von hydraulischer Energie in elektrische Energie, wobei diese Anlage eine Wasserturbine (1), einen Wasserzulauf (5) zur Zuführung einer Zwangs-Wasserströmung (E) zu der Turbine, einen Wasserablauf (8) zur Ableitung der aus der Turbine fließenden Strömung und Leitschaufeln (20) zur Führung der Strömung in den Wasserablauf umfasst, wobei jede Leitschaufel (20) um eine Achse (X₂₂) drehbar ist, welche die Wand (84) des Wasserablaufs schneidet, wobei die Anlage Mittel (10, 30) zur Steuerung der Winkelposition (α) der Leitschaufel um ihre Rotationsachse umfasst, **dadurch gekennzeichnet, dass** jede drehbare Leitschaufel (20) in die Wand (84) des Wasserablaufs (8) einziehbar ist, und dass die Anlage Mittel (21) umfasst, die geeignet sind, das Versenken der Leitschaufel (20) in der Wand zu regeln.

2. Anlage nach Anspruch 1, **dadurch gekennzeichnet, dass** die Steuermittel (10, 30) geeignet sind, die Winkelposition (α) der Leitschaufel (20) in Abhängigkeit von mindestens einem Parameter (Q, ω, H, P), der repräsentativ für die Strömung (E) ist, zu fixieren.

3. Anlage nach einem der vorhergehenden Ansprüche, **dadurch gekennzeichnet, dass** die oder jede drehbare Leitschaufel (20) von der Innenseite dieses Wasserablaufs aus von der Wand (84) des Wasserablaufs (8) abnehmbar ist.

4. Anlage nach einem der Ansprüche 1 oder 2, **dadurch gekennzeichnet, dass** sie an der Außenseite (841) der Wand (84) des Wasserablaufs (8) einen Zugangsstollen (100) umfasst, und dass die oder jede Leitschaufel (20) von dem Stollen aus von dieser Wand abnehmbar ist.

5. Anlage nach einem der vorhergehenden Ansprüche, **dadurch gekennzeichnet, dass** jede Leitschaufel (20) einstückig mit einem Kolben (21) ausgebildet ist, der relativ zu einem an der Wand befestigten Teil (27) parallel zu der Rotationsachse (X₂₂) der Leitschaufel verschiebbar montiert ist, dass eine die Leitschaufel und den Kolben umfassende Teilbaugruppe (20-25) mit der Möglichkeit montiert ist, sich um die Rotationsachse der Leitschaufel zu drehen, und dass diese Teilbaugruppe Mittel (243) zum Zusammenwirken mit Mitteln (29, 30) zum drehenden Antreiben der Teilbaugruppe um die Rotationsachse (X₂₂) der Leitschaufel umfasst.

6. Anlage nach einem der vorhergehenden Ansprüche, **dadurch gekennzeichnet, dass** sich jede bewegliche Leitschaufel (20) beidseits ihrer Rotationsachse (X₂₂) erstreckt.

7. Verfahren zur Steuerung einer Anlage (I) zum Wandeln von hydraulischer Energie in elektrische oder mechanische Energie, umfassend eine Wasserturbine (1), einen Wasserzulauf (5) zur Zuführung einer Zwangs-Wasserströmung (E) zu der Turbine, einen Wasserablauf (8) zur Ableitung der aus der Turbine fließenden Strömung und mindestens eine Leitschaufel (20) zur Führung der Strömung in den Wasserablauf, wobei das Verfahren einen Schritt umfasst, der aus der Steuerung (S₃) der Winkelposition (α) jeder Leitschaufel (20) zur Führung der Strömung (E) in den Wasserablauf um eine die Wand (84) des Wasserablaufs (8) schneidende Achse (X₂₂) besteht, und **dadurch gekennzeichnet, dass** es einen Schritt umfasst, der aus der Steuerung der Position jeder in der Wand (84) des Wasserablaufs (8) versenkten beweglichen Leitschaufel (20) umfasst.

8. Verfahren nach Anspruch 7, **dadurch gekennzeichnet, dass** die Winkelposition der Leitschaufel (20) in Abhängigkeit von mindestens einem Parameter (Q, ω, H, P) gesteuert wird, der repräsentativ für die Strömung (E), insbesondere für den Durchsatz (Q) der Strömung (E) ist.

9. Verfahren nach einem der Ansprüche 7 oder 8, **dadurch gekennzeichnet, dass** die Anlage mehrere Leitschaufeln (20) umfasst, die über die Wand (84) des Wasserablaufs (8) verteilt sind, und die Position der Leitschaufeln gruppenweise gesteuert wird.

10. Verfahren nach einem der Ansprüche 7 oder 8, **dadurch gekennzeichnet, dass** die Anlage mehrere Leitschaufeln (20) umfasst, die über die Wand (84) des Wasserablaufs (8) verteilt sind, und die Position jeder Leitschaufel individuell gesteuert wird.

11. Verfahren nach einem der Ansprüche 7 bis 10, **dadurch gekennzeichnet, dass** die Position jeder in der Wand (84) des Wasserablaufs versenkten beweglichen Leitschaufel (20) gesteuert wird, indem man einer Kammer (C₂₂), die in einem Körper (22) vorgesehen ist, der zu einer Teilbaugruppe (20-25) gehört und von einem einstückig mit der Leitschaufel ausgebildeten Kolben (21) begrenzt wird, aus dem Wasserzulauf (5) stammende Druckluft zuführt oder nicht.

## Claims

1. Plant (I) for converting hydraulic energy into electrical energy, this plant comprising a hydraulic turbine (1), a penstock tube (5) leading a forced flow (E) of water to the turbine, a tube (8) for discharging the flow leaving the turbine and guide vanes (20) for guiding the flow in the discharge tube, each guide vane (20) being rotationally mobile about an axis (X₂₂) secant to the wall (84) of the discharge tube, the plant comprising control means (10, 30) controlling the angular position (α) of the vane about its axis of rotation, **characterized in that** each rotationally mobile vane (20) can be retracted into the wall (84) of the discharge tube (8) and **in that** the plant comprises means (21) able to regulate the extent to which the vane (20) is embedded in the wall.

2. Plant according to Claim 1, **characterized in that** the control means (10, 30) are able to fix the angular position (α) of the guide vane (20) as a function of at least one parameter (Q, ω, H, P) representative of the flow (E).

3. Plant according to one of the preceding claims, **characterized in that** the or each rotationally mobile vane (20) can be dismantled, with respect to the wall (84) of the discharge tube (8), from the inside of this tube.

4. Plant according to one of Claims 1 and 2, **characterized in that** it comprises an access gallery (100) providing access to the external face (841) of the wall (84) of the discharge tube (8) and **in that** the or each vane (20) can be dismantled, with respect to this wall, from the gallery.

5. Plant according to one of the preceding claims, **characterized in that** each vane (20) is secured to a piston (21) mounted with the ability to slide, parallel to the axis (X₂₂) of rotation of the vane, with respect to a component (27) fixed to the wall, **in that** a subassembly (20-25) comprising the vane and the piston is mounted with the possibility of rotating about the axis of rotation of the vane and **in that** this subassembly comprises means (243) of collaborating with drive means (29, 30) that drive the rotation of the subassembly about the axis (X₂₂) of rotation of the vane.

6. Plant according to one of the preceding claims, **characterized in that** each mobile vane (20) extends on each side of its axis of rotation (X₂₂).

7. Method of controlling a plant (I) for converting hydraulic energy into electrical or mechanical energy comprising a hydraulic turbine (1), a penstock tube (5) leading a forced flow (E) of water to the turbine, a tube (8) for discharging the flow leaving the turbine and at least one guide vane (20) for guiding the flow in the discharge tube, the method comprising a step involving controlling (S₃) the angular position (α), about an axis (X₂₂) secant to the wall (84) of the discharge tube (8), of each guide vane (20) that guides the flow (E) in the discharge tube and **characterized in that** it comprises a step involving controlling the position of each mobile vane (20) in terms of the extent to which it is embedded in the wall (84) of the discharge tube (8).

8. Method according to Claim 7, **characterized in that** the angular position of the vane (20) is controlled as a function of at least one parameter (Q, ω, H, P) representative of the flow (E), notably of the flow rate (Q) of the flow (E).

9. Method according to one of Claims 7 and 8, **characterized in that** the plant comprises several vanes (20) distributed over the wall (84) of the discharge tube (8) and the position of the vanes is controlled as a group.

10. Method according to one of Claims 7 and 8, **characterized in that** the plant comprises several vanes (20) distributed over the wall (84) of the discharge tube (8) and the position of each vane is controlled individually.

11. Method according to one of Claims 7 to 10, **characterized in that** the position of each mobile vane (20) in terms of the extent to which it is embedded in the wall (84) of the discharge tube is controlled by either supplying or not supplying pressurized water from the penstock tube (5) to a chamber (C₂₂) formed in a body (22) belonging to a subassembly (20-25) and delimited by a piston (21) secured to the vane.
